# EUROPÄISCHE PATENTSCHRIFT

(11) **EP 1 310 686 B1**
(45) Veröffentlichungstag und Bekanntmachung des Hinweises auf die Patenterteilung: **22.06.2005**
(21) Anmeldenummer: 02022396.2
(22) Anmeldetag: 10.10.2002
(51) Int. Cl.: F16B 43/00, F16B 5/02

(54) **Bauteilverbindung**
Workpiece joint
Raccordement de pièces

(30) Priorität: 09.11.2001 DE 10155104
(43) Veröffentlichungstag der Anmeldung: 14.05.2003
(73) Patentinhaber: Bayerische Motoren Werke Aktiengesellschaft, 80809 München (DE)
(72) Erfinder: Stoeckl, Peter, 83064 Raubling (DE); Zeidler, Thomas, 85662 Hohenbrunn (DE)

(56) Entgegenhaltungen:
- EP-A- 0 585 684
- WO-A-94/20255
- DE-A- 2 255 839

## Beschreibung

Die vorliegende Erfindung betrifft eine Bauteilverbindung gemäß dem Oberbegriff des Patentanspruches 1.

Eine derartige Bauteilverbindung ist aus der EP 0 585 684 A1 bekannt. Eine ähnliche Bauteilverbindung ist aus der DE 2 255 839 A1 bekannt.

Aus der WO 94/20255 ist eine Bauteilverbindung zwischen einem Aluminiumbauteil und einem Stahlbauteil bekannt, bei der zwischen den beiden Bauteilen ein Bimetall-Element mit einer Stahl- und einer Aluminiumschicht angeordnet ist. Das Bimetallbauteil ist zwischen das Stahlbauteil und das Aluminiumbauteil eingeschweißt.

Insbesondere im Kraftfahrzeugbereich hält der Trend zum Leichtbau an, wobei zunehmend Stahlbauteile durch Aluminiumbauteile ersetzt werden. Bei stoffschlüssigen Verbindungen zwischen Stahl- und Aluminiumbauteilen sind Fertigungsprobleme zu überwinden, die man u.a. durch die Verwendung von "Bimetall-Zwischenelementen" zu lösen versucht. Die Verbindung von Stahl und Aluminium ist aber nicht nur bei stoffschlüssigen Verbindungen problematisch, sondern auch bei Schraub- oder Nietverbindungen und sonstigen form- bzw. reibschlüssigen Bauteilverbindungen. Ein Problem besteht darin, dass im Verbindungsbereich Kontaktkorrosion auftreten kann.

Aufgabe der Erfindung ist es, die oben genannten Probleme bei der Verbindung von Stahl- und Aluminiumbauteilen zu vermeiden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem "clipartigen", U-förmigen Zwischenelement, das aus mindestens zwei Schichten besteht und das zwischen zwei aus unterschiedlichen Materialien bestehende miteinander zu verbindende Bauteile eingesetzt wird. Die eine Schicht des "Clipelements" besteht aus demselben Material wie das eine Bauteil und die andere Schicht besteht aus demselben Material wie das andere Bauteil.

Das clipartige Zwischenelement braucht nicht unbedingt die Form eines herkömmlichen "U" haben. Insbesondere können die Schenkel des Zwischenelements unterschiedlich lang und unterschiedlich breit sein. Die Schenkel brauchen auch nicht unbedingt eben und parallel zu sein. Sie können gebogen, gewellt oder in sonstiger Weise profiliert sein.

Unter "U-förmig" ist hier ganz allgemein zu verstehen, daß das Zwischenelement ähnlich wie eine Klammer auf ein Bauteil aufsteckbar bzw. aufschiebbar ist.

Wenn beispielsweise ein Stahlblech mit einem Aluminiumblech verschraubt oder vernietet werden soll, dann wird ein U-förmiges bzw. "klammerartiges" Bimetall-Zwischenelement verwendet, das eine Stahl- und eine Aluminiumschicht aufweist. Das Bimetall-Zwischenelement ist so gebogen, dass die eine Schicht auf der Schenkelinnenseite und die andere Schicht auf der Schenkelaußenseite liegt. Vor dem Verschrauben bzw. Vernieten der beiden Bauteile wird das klammerartige Zwischenelement auf den Randbereich eines der beiden Bauteile aufgeschoben. Dabei ist zu beachten, dass nicht unterschiedliche Materialien zur Anlage aneinander kommen. Das heißt, wenn beispielsweise die Schenkelinnenseite des Zwischenelementes aus Aluminium ist, dann wird das Zwischenelement auf das Aluminiumbauteil aufgeschoben und nicht etwa auf das Stahlbauteil. Die Außenseite des Zwischenelementes, die aus Stahl besteht, liegt dann an dem Stahlbauteil an. Als Verbindungselement kann beispielsweise ein Stahlbolzen mit einer Stahlmutter oder ein Niet etc. verwendet werden, der die beiden Bauteile und das Zwischenelement durchsetzt.

Das Zwischenelement kann ein nur lokal unmittelbar an der Verbindungsstelle anzubringender "Verbindungsclip" sein, der nur wenig größer als der Kopf des Schraubbolzens bzw. der Mutter ist.

Bei einer Variante der Erfindung kann als Zwischenelement auch ein längeres "Kantenprofil" verwendet werden, das so lang ist, dass es sich nicht nur im unmittelbaren Verbindungsbereich der beiden Bauteile erstreckt, d.h. nicht nur unmittelbar im Bereich einer Schraube bzw. eines Niets, sondern über einen längeren Kantenbereich eines der beiden Bleche.

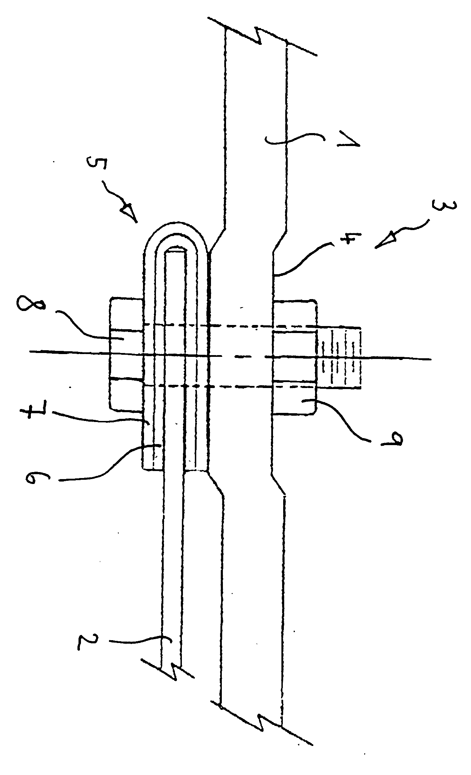

Im folgenden wird die Erfindung anhand eines Ausführungsbeispiels im Zusammenhang mit der Zeichnung näher erläutert.

Die einzige Figur zeigt eine Schraubverbindung zweier Bleche, wobei zwischen den beiden Blechen ein Bimetall-Zwischenelement eingesetzt ist.

Ein erstes Blech 1, das beispielsweise ein Stahlblech ist, ist mit einem Leichtmetallblech 2 verbunden. Das Leichtmetallblech 2 kann beispielsweise ein Nichteisenmetallblech sein, ein "Sandwichblech" aus zwei oder mehreren Edelstahlschichten etc. Das Stahlblech 1 weist hier im Bereich der Verbindungsstelle 3 eine flanschartige Einformung 4 auf.

Auf den hier dargestellten Randbereich des Leichtmetallbleches 2 ist ein U-förmiges bzw. klammerförmiges Bimetall-Zwischenelement 5 aufgeschoben, das an seiner "Schenkelinnenseite" aus einer Leichtmetallschicht 6 und an seiner Schenkelaußenseite aus einer Stahlschicht besteht. Die Leichtmetallschicht 6 besteht aus demselben Material wie das Leichtmetallblech 2.

Das Zwischenelement 5 hat hier zwei ebene, gleich lange und parallele Schenkel. Dies muß aber nicht unbedingt der Fall sein. Die Schenkel können auch eine unterschiedliche Länge und Breite haben und brauchen im demontierten Zustand auch nicht unbedingt eben und parallel sein.

Zur Verbindung des Stahlbleches 1 mit dem Leichtmetallblech 2 sind eine Stahlschraube 8 sowie eine Stahlmutter 9 vorgesehen. Die Stahlschraube 8 durchsetzt das Stahlblech 1, das Leichtmetallblech 2 und das auf das Leichtmetallblech 2 aufgeschobene U-förmige Zwischenelement 5.

Durch das Zwischenelement 5 ist hierbei sichergestellt, dass nur gleiche Materialien einander unmittelbar berühren.

Eine derartige Schraubverbindung kann beispielsweise zur Befestigung des "Hutablageblechs" an der Rohkarosse eines Fahrzeugs verwendet werden. Bei herkömmlichen Fahrzeugen ist die Hutablage zwar häufig noch derart in die Rohkarosserie eingebunden, dass sie zur Karosseriesteifigkeit beiträgt. Zukünftig versucht man aber, den Kraftfluss fast ausschließlich über die Randbereiche der Karosserie zu leiten. Die Hutablage soll primär nur noch eine akustische bzw. schalldämmende Funktion haben. Demzufolge ist man bestrebt, für die Hutablage spezielle lärmabsorbierende Materialien, z.B. in Form von Mehrschichtblechen (Sandwichblechen), einzusetzen. Derartige Sandwichbleche bestehen üblicherweise aus mehreren verschiedenen Nichteisenmetallschichten. Im Randbereich muss die Hutablage jedoch mit der Stahlkarosserie verbunden werden, was bei Bauteilverbindungen nach dem Stand der Technik zu Korrosionsproblemen, insbesondere zu Kontaktkorrosion führen kann.

Durch Verwendung eines Zwischenelementes gemäß der Erfindung kann erreicht werden, dass nur gleiche Materialien aneinander anliegen. Das heißt, auf die beispielsweise aus einem Nichteisenmetallblech hergestellte Hutablage werden an den "Anschraubstellen" bzw. im gesamten Randbereich klammerförmige Zwischenelemente aufgeschoben, die an ihrer Außenseite eine Stahlschicht aufweisen, welche zur Anlage an der Stahlkarosserie kommt. Somit wird eine einwandfreie Schraubverbindung erreicht.

## Patentansprüche

1. Bauteilverbindung, mit zwei Bauteilen, und
einem Zwischenelement, das in einer Seitenansicht U-förmig ist und das zwischen den zwei miteinander verbundenen Bauteilen angeordnet ist, wobei das Zwischenelement eine erste Schicht (7) aufweist, die an dem ersten Bauteil (1) anliegt und zweite Schicht (6), die an dem zweiten Bauteil (2) anliegt,
**dadurch gekennzeichnet, dass**
das erste Bauteil (1) und die erste Schicht (7) des Zwischenelementes (5) aus einem ersten Material bestehen und dass das zweite Bauteil (2) und die zweite Schicht (6) des Zwischenelementes (5) aus einem sich vom ersten Material unterscheidenden zweiten Material bestehen und dass
in den Schenkeln des Zwischenelementes (5) und in den miteinander verbundenen Bauteilen (1, 2) jeweils eine Durchgangsöffnung vorgesehen ist, für den Durchtritt eines bolzenartigen Verbindungselementes (8).

2. Bauteilverbindung nach Anspruch 1, **dadurch gekennzeichnet, dass** die beiden Schenkel des Zwischenelementes (5) im demontierten Zustand einen Abstand voneinander haben, der im wesentlichen gleich der Dicke eines der beiden Bauteile (2) ist.

3. Bauteilverbindung nach einem der Ansprüche 1 oder 2, **dadurch gekennzeichnet, dass** das Zwischenelement (5) auf eines der beiden Bauteile (2) aufgeschoben ist und den Randbereich dieses Bauteiles (2) klammerartig umgreift.

4. Bauteilverbindung nach einem der Ansprüche 1 bis 3, **dadurch gekennzeichnet, dass** die Dicke des einen Bauteiles (2) in Bezug auf den Abstand der Schenkel des Zwischenelementes (5) ein Übermaß aufweist, zur vorläufigen Fixierung des Zwischenelementes (5) bei der Montage.

5. Bauteilverbindung nach einem der Ansprüche 1 bis 4, **dadurch gekennzeichnet, dass** die Schenkelenden leicht aufgebogen bzw. an der Innenseite angeschrägt sind, zum Erleichtern des Aufschiebens des Zwischenelementes (5) auf das eine Bauteil (2).

6. Bauteilverbindung nach einem der Ansprüche 1 bis 5, **dadurch gekennzeichnet, dass** das erste Bauteil (1) ein Stahlblech und das zweite Bauteil (2) ein Aluminiumblech ist und dass das Zwischenelement (5) ein U-förmig gebogenes Stahl-/Aluminium-Bimetallblech ist.

7. Bauteilverbindung nach einem der Ansprüche 1 bis 6, **dadurch gekennzeichnet, dass** an der Schenkelinnenseite des U-förmigen Zwischenelementes (5) eine Aluminiumschicht (6) und an der Schenkelaußenseite eine Stahlschicht (7) vorgesehen ist.

8. Bauteilverbindung nach einem der Ansprüche 1 bis 7, **dadurch gekennzeichnet, dass** das Verbindungselement durch einen Schraubenbolzen (8) und eine Mutter (9) gebildet ist, wobei die Schenkel des Zwischenelements (5) so lang und so breit sind, dass der Kopf des Schraubenbolzens (8) bzw. die Mutter (9) vollflächig aufliegt.

## Claims

1. A connection between components, comprising two components and an intermediate element which is U-shaped in side view and is disposed between the two components for connecting, wherein the intermediate element comprises a first layer (7) adjoining the first component (1) and a second layer (6) adjoining the second component (2),
**characterised in that** the first component (1) and the first layer (7) of the intermediate element (5) are formed of a first material and the second component (2) and the second layer (6) of the intermediate element (5) are formed of a second material differing from the first material and the limbs of the intermediate element (5) and the components (1, 2) for joining together are each formed with a through opening for inserting a bolt-like connecting element (8).

2. A connection according to claim 1, **characterised in that** in the dismantled state, the two limbs of the intermediate element (5) are separated by a distance substantially equal to the thickness of one of the two components (2).

3. A connection according to claim 1 or 2, **characterised in that** the intermediate element (5) is slid on to one of the two components (2) and engages like a clamp around the edge region of the said component (2).

4. A connection according to any of claims 1 to 3, **characterised in that** the thickness of the one component (2), relative to the distance between the limbs of the intermediate element (5), is given an oversize for temporarily fixing the intermediate element (5) during assembly.

5. A connection according to any of claim 1 to 4, **characterised in that** the ends of the limbs are slightly bent or bevelled on the inside for easier sliding of the intermediate element 5 on to the one component (2).

6. A connection according to any of claims 1 to 5, **characterised in that** the first component (1) is a steel sheet and the second component (2) is an aluminium sheet and the intermediate element (5) is a U-shaped steel/aluminium bimetallic sheet.

7. A connection according to any of claims 1 to 6, **characterised in that** an aluminium layer (6) is provided on the inside of the limbs of the U-shaped intermediate element (5) and a steel layer (7) is provided on the outside of the limbs thereof.

8. A connection according to any of claims 1 to 7, **characterised in that** the connecting element is a screw bolt (8) and a nut (9), wherein the limbs of the intermediate element (5) have a length and a width such that the full surface of the nut (9) and of the head of the screw bolt (8) abuts the limbs.

## Revendications

1. Liaison de composants constituée de deux composants et d'un élément intermédiaire, en forme de U vue de côté, placé entre les deux composants et liés les uns aux autres, l'élément intermédiaire présentant une première couche (7) en contact avec le premier composant (1) et une deuxième couche (6) en contact avec le deuxième composant (2),
**caractérisée en ce que**
le premier composant (1) et la première couche (7) de l'élément intermédiaire (5) sont en un premier matériau,
le deuxième composant (2) et la deuxième couche (6) de l'élément intermédiaire (5) sont en un deuxième matériau différent du premier, et
une ouverture de passage pour un élément de liaison (8) sous forme de boulon est respectivement prévue dans les branches de l'élément intermédiaire (5) et dans les composants (1, 2) liés l'un à l'autre.

2. Liaison de composants selon la revendication 1,
**caractérisée en ce qu'**
à l'état démonté, les deux branches de l'élément intermédiaire (5) ont l'une par rapport à l'autre un écart pratiquement égal à l'épaisseur d'un des deux composants (2).

3. Liaison de composants selon l'une des revendications 1 ou 2,
**caractérisée en ce que**
l'élément intermédiaire (5) enfilé sur un des deux composants (2) entoure en agrafe la zone de bord de ce composant (2).

4. Liaison de composants selon l'une des revendications 1 à 3,
**caractérisée en ce que**
l'épaisseur de l'un des composants (2) a une cote en excès par rapport à l'écart des branches de l'élément intermédiaire (5) afin de fixer provisoirement l'élément intermédiaire (5) lors du montage.

5. Liaison de composants selon l'une des revendications 1 à 4,
**caractérisée en ce que**
les extrémités de branches sont légèrement recourbées ou biseautées sur le côté intérieur pour que l'élément intermédiaire (5) soit plus facile à enfiler sur l'un des composants (2).

6. Liaison de composants selon l'une des revendications 1 à 5,
**caractérisée en ce que**
le premier composant (1) est une tôle en acier et le deuxième composant (2) une tôle en aluminium, et
l'élément intermédiaire (5) est une tôle bimétal acier et aluminium recourbée en U.

7. Liaison de composants selon l'une des revendications 1 à 6,
**caractérisée par**
une couche en aluminium (6) sur le côté intérieur de branche de l'élément intermédiaire (5) en U et une couche en acier (7) sur le côté extérieur de branche.

8. Liaison de composants selon l'une des revendications 1 à 7,
**caractérisée en ce que**
l'élément de liaison est formé par un boulon fileté (8) et par un écrou (9), les branches de l'élément intermédiaire (5) ont alors une longueur et une largeur telles que la tête du boulon fileté (8) ou de l'écrou (9) y repose par toute sa surface.
